# EUROPEAN PATENT SPECIFICATION

(11) **EP 2 059 398 B1**
(45) Date of publication and mention of the grant of the patent: **30.12.2015**
(21) Application number: 07733562.8
(22) Date of filing: 21.03.2007
(51) Int. Cl.: B42D 15/00

(54) **SECURITY ARTICLES AND DEVICES CONTAINING CODED HOLOGRAPHIC PLATELETS AND METHODS OF MANUFACTURING THE SAME**
CODIERTE HOLOGRAPHISCHE PLÄTTCHEN ENTHALTENDE SICHERHEITSARTIKEL UND -VORRICHTUNGEN UND HERSTELLUNGSVERFAHREN DAFÜR
ARTICLES ET DISPOSITIFS DE SÉCURITÉ CONTENANT DES PLAQUETTES HOLOGRAPHIQUES CODÉES, PROCÉDÉS DE PRODUCTION CORRESPONDANTS

(30) Priority: 04.09.2006 GB 0617264
(43) Date of publication of application: 20.05.2009
(73) Proprietor: Metallic Security s.r.o., 466 23 Janblonec nad Nisou (CZ)
(72) Inventor: HOUHA, Roman, 250 68 Rez 199 (CZ); TETHAL, Tomas, 250 68 Rez 199 (CZ); KOTACKA, Libor, 250 68 Rez 199 (CZ); JERMOLAJEV, Igor, 250 68 Rez 199 (CZ); DRINKWATER, John, Hampshire (GB); HRADENCY, Cestmir, 250 68 Rez 199 (CZ)
(74) Representative: Gill, David Alan
(86) International application number: PCT/GB2007/050137
(87) International publication number: WO 2008/029175

(56) References cited:
- WO-A-02/02351
- WO-A-03/009225
- WO-A-2005/078530

## Description

The present invention related to the manufacture and composition of articles comprising optical security device.

Coded diffractive platelets is known from WO 2005/078530 A, which discloses an article according to the preamble of claim 1.

The invention relates to the techniques, and the articles so formed using these techniques, for incorporating such encoded diffractive platelets into materials such as papers, plastics and hot stamping foils to provide securitisation of these materials and to provide a delivery and carrier method for the diffractive platelet into the end security usage. In such end usage, the encoded diffractive platelets can be authenticated to provide a highly secure verification of the authenticity of the paper document, plastic card or applied transfer or hot stamping foil as required.

Holograms and other forms of diffractive security images are known for their use as visually-authenticable security devices used in anti-counterfeit and anti copying applications as they can produce unique optical effects, or carry unique properties which are prohibitively difficult to copy or counterfeit. The use of diffractive devices is established in the security print field to protect security documents such as banknotes and documents of value and the like, and in the brand-protection and article-protection fields particularly in relation to numbered or uniquely identified articles of value.

Diffractive devices can produce images by the process of optical diffraction that can be made to form optically variable images with characteristic features that can be verified by the public or with the aid of simple magnifiers or simple authentication devices. The features can be created such that origination technology required is prohibitively difficult to reproduce or pass off using simple alternative techniques such as print or simple diffraction foils.

Examples and details of the potential optical security techniques available with laser origination and electron beam lithography can be found in WO 03/009225 A2 which details the use of electron beam lithography to form uniquely secure visual and microscopically authenticable images where the original diffractive pattern is formed by direct writing by electron beam lithography. Patterning methods and other techniques whereby new forms of public recognizable features, such as image switches and covert microscopically authenticable features if the form of nano text and nano maps may be formed are disclosed.

Combined overt and covert diffractive optical security features are also known from WO 02/02351 A1 which describes how a optically variable linear effect (optical kinetic effect) can be combined with a covertly verifiable laser projected image to produce an improved security device containing both a public recognisable movement feature (expansion and contraction or apparent motion) coupled with an out-of-plane laser verifiable covert image verified by a laser reader with adapted imaging device. Such a secure optical feature is especially suited for origination by electron beam lithography and can also be manufactured by classical holographic laser interferometric origination.

Further, it is known to apply holographic / diffractive images in the holographic and security print fields by the method of manufacturing label material, or hot stamping foil, and transferring these onto articles or documents by the process of hot stamping or label application. Typically in these processes a single image master is made and transferred by a plating and mechanical or optical recombination process into a series of ganged-up images on an embossing master, formed as a metal embossing shim, via a nickel plating process. A succession of mother - daughter copy shims of the imaged shims can be made with one generation used to thermally (or UV cast) replicate the diffractive image typically by heat and pressure into a thermoformable material or coating generally in a reel to reel process. The final images are almost always metallised usually with bright reflective materials such as aluminum though a number of other reflectors can be used such as glass type materials or more non reactive metals. Generally labels and foils formed by such embossing processes have limited resistance to image loss by heating or by chemical attack in demanding applications.

It also is known in the prior art to use numbered holographic images, potentially carrying covert information to uniquely identify articles of value and so protects against counterfeiting. A typical application would be as a tamper evident label carrying a laser etched number or thermally applied number. Again in demanding applications in high temperature or aggressive environments such labels or foils can have a limited lifetime (eg engine compartment exhibiting heat and solvents such as petrol or oils, brake fluids, and the like) or for example in an ID card base experiencing a counterfeit / alteration attack seeking to change data or experiencing long term multi year abrasion.

It is also known in the prior art to manufacture products for marking articles such as automobiles which use an individually marked polyester platelet which typically can be applied using a spray gun. An example of such a system is manufactured by Datadot Technology Limited of Australia who manufacture polyester platelets c 1mm diameter and with 0.1 mm this carrying an identification code burned by laser but not carrying any diffractive authentication device. Such platelets are mixed with a special adhesive and applied to fore example car parts and areas of car bodies as markers.

Various other encoded micro-particles are also known in the prior art as detailed in WO 2005078530. Here an alternative form of coded metallic holographic platelet, together with a method of manufacturing the encoded identification platelets is disclosed and which platelets carry a holographic identification code recorded by a modified electroplating method, which cannot easily be copied or counterfeited - these encoded holographic platelets are hereafter referred to as OV Dots. The present invention seeks to provide for improved security devices such as compared with the current art, and to methods of producing the same.

As noted, the present invention relates to the earlier work described in WO 2005/078530 and seeks to reveal new devices formed by incorporation of the encoded holographic metallic platelets as described in that document into security paper, plastic ID card bases and hot stamping foils used as a means of transferring and securing the dots on security documents and the like and to a related method for such formation.

In any case WO 2005/078530 A, WO 03/09225 A2 and WO 02/02351 A1 are incorporated herewith by reference.

As will be appreciated, the invention provides for methods by which hot stamping foils, inks and plastic card bases may be manufactured incorporating OV Dot to form unique security structures when these materials are allied, for example, with security papers such as documents of value, passports, tax stamps, banknotes and the like.

Such novel methods may be used to incorporate the uniquely encoded OV Dot metallic platelets in to inks, hot stamping foils and extrusion manufactured plastic sheets and further to incorporate such devices into a wide range of previously inaccessible final security devices such as documents, cards and the like.

The common theme in this invention is the securitisation of a relatively standard available product such as paper, printed documents or hot foil or plastic base stock by the incorporation into the surface or substrate of OV Dots to form an array of unique security products. Also a convenient application / carrier method for the OV Dot is provided so that it can be delivered as a security anti-counterfeit device onto the product or in application without excessive additional cost.

The common manufacturing theme within this invention is the use of special and unusual techniques to disperse and coat the OV Dots onto the substrate when appropriate to form a unique product such as an OV Dot coated paper or an OV Dot foil or holographic foil.

These novel manufacturing and dispersing techniques are required because the size of the OV dots and their density, make it difficult to coat or print with conventional techniques - typical print particles are sized in sub or up to a few microns but an OV Dot is a disc of 50-250 micron thickness 3 to say 20 micron and is therefore very difficult to coat or print with standard techniques as most direct gravure printing rollers will not handle this relatively coarse size of material particle. Also flexographic print or lithographic print techniques are not suitable for this size of particie.

A particularly useful aspect of this invention is the concept of using a spray dispenser for spraying OV Dot particles, and lacquer containing OV Dot particles to particles, and the application of particles of OV Dot to a web process for manufacture of both OV Dot securitized paper and foils. It is envisaged that a dispenser with a jet of suitable inside diameter is used for the spraying of OV Dot particles mixed in the varnish (solvent base). The invention covers all devices made using this method and incorporating OV Dots, typically for security papers and foils.

The invention provides for an article protected by security features, the article comprising a substrate material including a plurality of the said security features each comprising an encoded holographic platelet incorporated into the surface and/or body of the article, wherein each platelet carries a surface relief diffractive structure forming a holographic device and can be authenticated by inspection of the holographic device by illumination and visual, eyeglass and magnifier inspection, and which can also be authenticated by inspection under magnification of an arbitrarily passage-shaped hole in the platelet carrying an authenticating code, and so as to provide for an anti-counterfeit and/or authentication feature of the article.

The inspection id required, can also serve to authenticate a machine readable laser authentifiable feature.

As will be appreciated, the invention can provide for items such as security papers, foils, plastic ID card bodies and the like have incorporated into their surface or the body of the material a new form of diffractive metal platelet / disc containing field authenticable diffractive images and an identification code.

In another aspect of this invention, there is provided an article as above wherein the body of a material of the holographic metal platelet is nickel which can be further authenticated as nickel by means of mass spectroscopy and electrochemical and electrical inspection or other chemical analysis.

Preferably the size of the holographic metal platelets is in the range 50nm to 1 mm although a preferred size range is 100 - 300 micron. The dots can be circular or in the form of simple shapes.

Advantageously, the substrate material is one or a combination of paper, a security paper, hot stamping foil, diffractive imaged HRI hot stamping foil or a plastic sheet or moulding material such as, but not limited to, polyethylene terphalate (PET), polycarbonate or poly vinyl chloride (PVC) or cellulose acetate. Further, in this aspect also, the body of the material of the holographic metal platelet can comprise nickel which can be further authenticated as nickel by means of mass spectroscopy and other chemical analysis.

In another aspect of the invention, there is provided a security device as outlined above, wherein the substrate material is a paper or security paper and with the holographic metal platelets incorporated onto the surface by a process of spraying of the holographic metal platelets onto a wet paper web.

In another aspect of the invention, there is disclosed a security device as above where the substrate material is a textile or other cloth based material.

Advantageously, the device can be formed by a spray dispenser which is used to disperse the particles in the air over the wet paper web and wherein the dimensions of the spray device nozzles and rate of spray are adjusted to provide the desired holographic metal platelet density on the finished article.

As a further example, the substrate material comprise paper, such as a security paper, and wherein the holographic metal platelets having been incorporated into the surface of the device by a process of wet coating using the technique of meyer bar, direct gravure or reverse gravure or reverse kiss coating.

Preferably the direct or reverse gravure roller is in the form of a continuous groove pattern line or tri-helical which is of an aperture size sufficient to allow the holographic metal platelets to be allowed through on the substrate surface.

Advantageously, the pitch of the application roller lines is a typical maximum tip to tip dimensions 30% larger than the holographic metal platelet dimensions or typically 150micorn for 100um platelets and 275 micron for 200 micron platelets.

As will therefore be appreciated, in one method of the invention, there is provided a device for the creation of paper containing a secure OV Dot surface coating handling these diffractive metal platelets and for coating them uniformly onto articles and which employ a spray gun device to disperse the particles in the air over coated web of material just after coating and when it is still wet and supported by a wire (flat wire approach) - the OV Dots tend to settle flat as they glide down under gravity and thus do not protrude but sink into and are locked into the coating. This for paper is usually a resin designed to bind into the paper and lock in the metal discs. It should also be appreciated that paper can also be produced by using a rotating drum within the paper slurry to form the initial wet web of paper into which the OV Dot particles can be sprayed. Both drum and flat wire forms of paper making are envisaged within the scope of this invention as being applicable to manufacture of OV Dot -containing paper as are any other forms of paper making.

In a preferred embodiment of the invention a paper has OV Dots added into its surface by spray coating a wet paper web by positioning a spray head spraying the OV Dots down onto the wet paper head just after the paper pulp is formed as a wet paper web on a reel of mesh wire support in a paper mill. The OV Dot spray is orientated to spray down on the web to form gently falling particles which land on the wet paper web and sink slightly into the surface to be trapped in the paper surface during drying. The sizes of the spray nozzle heads and the rate of spray are preferably carefully adjusted to provide a gentle slow spray to allow the OV Dot discs to orientate parallel to the paper web to alight with long axis parallel to the paper web on landing on the surface of the paper.

Thus an OV Dot securitsied paper coating can contain, for example, a few OV dot particles per page or label size after drying. The coating and paper can also optionally be calendared to flatten and smooth the paper under high pressure between smoothing rollers, typically done in a paper mill, to drive any protruding particles into the paper and provide a uniform flat surface. The web can also subsequently be coated or printed.

In another embodiment of this invention paper incorporating OV Dot can also be formed by mixing the OV Dot particles with wood pulp used as paper feedstock before producing the paper in a standard way - using paper pulp feedstock to carry the OV Dot. One change to the standard paper making process is required to achieve this. Normally the mass of paper pulp on the paper mill machine is filtered but as this would extract the OV Dot this step is not performed and the pulp must be preferably pre filtered before mixing with the OV Dots. This method can be less preferred than the spray approach as the OV Dot is distributed in the bulk of the paper rather near the surface where they can be more easily authenticated.

It should also be noted that in alternative embodiments of the invention the alternative coating techniques used for the manufacture of foil can also be used for OV Dot coating paper.

In a further embodiment of the invention relating to the security devices and secure substrates noted above, the invention describes a device and manufacturing method and article wherein the first substrate material comprise a hot-stamping foil, or imaged diffractive embossed and HRI metallised hot stamping foil, wherein the holographic metal platelets are incorporated by a method of coating of a heat seal adhesive or lacquer onto the foil or release coating , spraying of holographic metal platelets into the heat seal adhesive and then subsequent over-coating by a second layer of heat seal adhesive to overcoat the particles to ensure transfer and so form a transfer foil containing holographic metal platelets.

In a further embodiment of the invention relating to the security devices and secure substrates above, the invention describes a device and manufacturing method and article produced in a further method wherein the first substrate material comprises a hot stamping foil, or imaged diffractive embossed and HRI metallised hot stamping foil, wherein the holographic metal platelets have been incorporated by a method of wet coating of a heat seal adhesive or lacquer onto the foil and wherein the coating contains holographic metal platelets and subsequent over-coating by a second layer of heat seal adhesive to overcoat the particles to ensure transfer to form a transfer foil containing holographic metal platelets, wherein in the first wet coating process the techniques of at least one of direct gravure or reverse gravure or reverse kiss coat is used where the engraved coating roller is in the form of a continuous groove pattern line or tri-helical line pattern of an aperture size sufficient to allow the holographic metal platelets to pass through on the substrate surface.

In another embodiment, the invention provides for manufacture of a hot stamping foil (transparent) or other types of foil with OV Dot particles in an adhesive layer, incorporated using a number of different coatings or spraying techniques. This is done by using standard coating techniques as per hot-stamping foil manufacture for release coat and adhesives, with additional steps of, firstly spraying particles on wet surface of coated adhesive layer before drying and, secondly over coating by fixing layer, typically a second adhesive layer.

In this formation of an OV Dot-carrying foil and OV Dot-carrying hot stamping foil or holographic hot stamping foil thee can be a coating of a conventional heat seal adhesive or conventional lacquer by direct or reverse gravure, meyer bar or some other suitable coating method and the OV Dots can then be sprayed onto the web, typically from above, to form a gentle settlement of free-falling discs to align the discs, so that they land with long axis parallel to the web direction and settle into the coating to be locked in the adhesive coating. In a second preferred step, the reel of hot stamping foil could then be re-coated with another layer or layers of the same or a different adhesive to over coat the dots to ensure they are fully locked into the body of the coating and so transfer with the body of the coating under hot stamping when the transfer layer is transferred under conditions of heat and pressure application to melt the heat seal adhesive and to bind to the application substrate, paper, plastic or metal for example and then for the release layer to be activated to allow the transfer layer to be transferred to the application article.

In both the above techniques, the spray rate of OV Dots can be adjusted to give the appropriate dot density on the final product and can advantageously be real time monitored using a computer-driven camera system analyzing the web.

It is noted that a preferred method can comprise the spray application of the OV Dots, and the invention also envisages using, instead of the spray, a shaker device allied to a mesh of small holes suspended above the wet web to provide another method of introducing the platelets in the first step.

The line structure would can comprise line coating rollers of for example say 110, 100 or 90 lines per inch (2.54cm) which gives approximately, for a 90 line roller, a 150 um gap typically 25-35um deep between peaks in a triangular groove structure for a line roller suited to coat say 100um diameter disc OV Dots for example. Such a coating roller would preferentially contain a line groove significantly larger than the largest dimension of the OV Dot to allow flow through and can typically coat the OV Dot within a suitable lacquer or in the case of a hot stamping foil within a suitable heat seal adhesive.

During the coating process a preferred method of coating is reverse kiss coat, where the coating roller applies material moving in the opposite direction to the web, an action that gives a smoothing effect to the coating which is advantageous in enabling the OV Dot discs to sit flat whilst the web of material passes into the coater ovens for drying of the solvents and for the locking together of the OV Dots and coatings. It can also be appreciated that other coating arrangements can also be used such as direct gravure, reverse gravure and meyer bar. Ideally the viscosity of the heat seal or lacquer coating carrying the OV Dot can be adjusted to enable the OV Dots to be retained in suspension and arrangements will be made to continuously agitate the coating reservoir to prevent the material settling out of solution. In a preferred method after the first coat is applied another coat is applied over the top of this to ensure a smooth coating and to ensure that any OV Dots on the surface are over-coated and so locked into the adhesive. A suitable coating technique for this can comprise a direct gravure technique using a fine roller to give a smooth coating finish.

It should also be noted that the techniques detailed above can be applied for the formation of a permanent laminate rather than a transfer foil product which can, for example, then be laminated to a second web to trap the OV Dots with a durable plastic structure. Such a structure could ideally be used for ID cards, plastic cards, etc and can also be made holographic by using one holographic laminate layer which advantageously could be coated with a transparent reflector such as titanium Dioxide or Zinc Sulphide. Such items can be used for the bodies of ID cards, smart cards and with PE coatings for conventional heat seal laminated cards.

It should also be noted that the final foil in both of the alternative manufacturing methods above can also incorporate additional coatings such as a scuff coating in order to provide more rub resistance on the final documents and not to prevent damage of the particles but to ensure they did not become dislodged from the surface. The hot stamping foil can optionally additionally carry a holographic image and for example HRI metallisation to provide a larger area visual diffractive image as well as the OV Dots requirement microscope or eyeglass authentication.

In another alternative embodiment of a method of the invention for forming an OV Dot an OV Dot carrying foil and OV Dot carrying hot stamping foil or holographic hot stamping foil there can be provided a conventional heat seal adhesive containing a dispersion of OV Dots using a very particular type of coating roller shaped on a microscopic level in the form of relatively large continuous groove line or helixical structure.

The hot stamping foil produced as above provides an alternative method of transferring the OV Dot onto a security paper or like using the established printing method of hot stamping. This can produce a unique device of OV Dots such as known from WO 2005/078530 and which looked into the surface of paper inside a hot stamped layer which may also contain other security devices such as for example fluorescent, IR up-converters or holographic / diffractive effects.

In a further aspect of the invention related to a method as noted above, a further device can be provided where the substrate of the device consists of paper or plastic material with holographic identification platelets incorporated in the surface by a process of hot stamping transfer using a holographic or plain hot stamping foil.

In a still further aspect of the invention related to a method as described a still further device can be provided wherein the substrate is manufactured using a cold or hot stamping transfer foil of the construction and double coating formation method as previously described.

According to a further aspect of the invention, the end product comprises a printed paper/foil with OV Dot particles mixed within a printed ink incorporated into the surface of security paper (or optionally plastic). In this embodiment of the invention, the OV Dot particles are mixed into ink (high viscosity) and printed by (rotary) screen printing. The screen with diameter of holes of about 3 times the of size of particles (approximately 300-600 micron) must be used (to be sure particles flow easily through screen at good distribution). The result is a quite thick print layer. In a preferred further step a pressured "wet calendar roll" can be used after print head to crush and flatten the layer down into the paper to penetrate the paper fibre but before drying unit to reduce thickness of print layer (this roll must have a silicon surface). Additional conventional print materials can also be added into this such as visual inks, fluorescents and IR up converters as required. In this embodiment of the invention it is envisaged including this method of manufacture, and also the optical security device incorporating OV Dots manufactured in this way, namely a security paper incorporating an ink layer containing OV Dots.

A product can be provided comprising a printed paper/foil with OV Dot particles inside of the printed ink and incorporated in to the surface of the security paper (or optionally plastic).

Then, in another aspect of the invention a security device as described above wherein the substrate of the device consist of plastic or paper or foil and the holographic metal platelets are applied locally or over all the device by a printing process such as rotary or flatbed screen printing or rotary web gravure print.

In this print aspect of the invention, the security device as in the description above can be created where the printing ink used consists of holographic metal platelets dispersed in a carrying lacquer, typically for a screen print process to be dried by either ultra violet light curing or by solvent or aqueous solution drying.

In an another embodiment of the invention the OV Dots can also be incorporated into a magnetic toner transfer print system using a magnetic toner, the dots can be coated alone for transfer or optionally coated with a heat seal coating or mixed with a powder of dots mixed into the heat activated binder resin, all of which can and can be printed using standard magnetic toner printing techniques where a drum is locally magnetized. The magnetized area preferentially picks up the magnetic OV Dot particles (and toner where applicable) then transfers this onto a substrate such as a paper substrate and can then be calendared to force the OV Dots into the paper or in the case of a toner containing a heat activated binder the paper can be thermally treated to melt the heat sensitive resin which serves to fuse the toner and OV Dots to the paper surface. This method can be used for local application of OV Dots during personalization of documents, during a securitizing or personalization process using tagged toners containing OV Dots. One such method to locally pattern OV Dots would be to use the OV Dots alone or to improve bonding by using the OV Dots within a suitable treated carrier resin / toner system to allow patterned transfer of the smaller nickel diffractive platelet onto a localized area of a document in personalisation to protect say in-filled documents against unauthorised alternation and to provide traceability and anti-counterfeit / anti-alteration treatment for magnetic toner in-filled documents.

Thus, the invention also provides for a security device as detailed above wherein the holographic metal platelets are applied to the substrate by a process of magnetic toner printing and the invention also refers to a variation on this wherein the holographic metal platelets are incorporated in localized areas of the document and are used as part of a personalisation process to allow addition authentication.

Another embodiment of the invention involves incorporating the OV Dots into extruded plastic foil (polycarbonate, typically one could also apply to PVC, PET) with OV Dot particles inside for identity card, payment and the like.

In this arrangement, the OV Dot particles are mixed in the mass of the plastic to be used for the extrusion process - typically this would be plastic material held in the form of pellets prior to melting in an extrusion head or line. Then the plastic film is extruded and finished by standard methods known in the field by extruding the molten material and then stretching the material in one dimension to form a flat sheet as the molten plastic cools. The OV dot particles then enter into the plastic pellets prior to extrusion and they need to be of a size and thickness to be reasonably physically stable to the stresses of the process. The OV Dot particles for this process must be in correlation of the thickness of extruded foil and they must be relatively solid. This relates to the limit for the size of personification character cut-through the particles since this cannot serve to weaken the particles too much.

So using this technique OV Dots can be added into the body of a plastic card or sheet of plastic to add an authenticating feature to the plastic substrate. Suitable plastics for this process would be PVC, PET and particularly polycarbonate. An advantage of the OV Dot particles for authenticating such plastic sheet with embedded holographic metal flakes is that the durability of the OV dot is comparable with that of the plastic card base, whereas conventional foiled holographic products tend to have less durability than the card substrate with the OV Dot incorporated and also extruded plastics and cards incorporating OV Dots according to this method of manufacture.

So in an alternative embodiment and manufacturing method, a security device as detailed above and containing a substrate and holographic metal platelets on the surface or in the body of the substrate consists of a sheet of plastic material (such as polyethylene terphalate (PET), polycarbonate and polyvinyl chloride (PVC), wherein the holographic metal platelets are incorporated into the body of the pellets of the plastic material feedstock prior to the extrusion process and are then incorporated into the extruded film by passing through the extrusion process with the film as it is heated and stretched to embed the holographic metal platelets within the body of the plastic card material. Thus by this method a security device embodying the invention can be formed consisting of an identity card or credit card .or the like containing holographic metal platelets manufactured by the extrusion process detailed above.

In a further aspect of the invention it can also be appreciated that OV Dots could be incorporated into injection moulded items by the same process as for the extrusion process detailed above. This can be achieved by mixing OV Dots into the molten material prior to moulding. For example, this can be offered for injection moulded optics, say to authenticate spectacle frames or in other devices such as a computer mouse.

In a further embodiment of the extrusion process, a security device consisting of a substrate containing holographic metal platelets can be made in the form of a plastic moulded item containing holographic metal platelets. This could be formed by a method of incorporating the holographic metal platelets into the feedstock pellets of the plastic material prior to injection moulding the two together. This serves to incorporate the holographic metal platelets throughout the body of the mould for authentication of the moulded item.

It should also be appreciated that the application methodologies embodying the present invention can also be used for more conventional platelets / disc-security devices to form additional unique structures from these, and it is our intention to include the use of these devices within our manufacturing method claim.

It should be appreciated that this the present invention relates to both the methods of incorporating the OV Dots into various articles and substrates and also relates to OV Dot bearing substrates themselves be they paper, foils, holographic foil, holographic or plain laminates, plastic sheeting, and methods and also final security articles consisting of paper containing OVDot dots.

The applications envisaged for these items containing OV Dots are primarily in the areas of document and personal security. On this basis, embodiments of the invention envisage covering security devices consisting of a substrate containing one or more holographic metal platelet on it surface or in its body which can be authenticated, and as noted appropriate substrates for these OV Dot security devices comprise papers, foils (both diffractive and plain) and plastic sheet material (eg polycarbonate) used in document security, passports, visas, cheques, licenses, banknotes, tax stamps, and plastics applications credit and ID cards.

Aspects of the invention also relate to linking the encoding on the OV Dot to various other encodings on the finished paper or card item such as stored in text, 2D bar codes, RF chips or smart card chips to further authenticate the items applied to the document or card with the specific information on it. A useful example of this would be with the track and trace tax stamp system described in WO 01/95249 A2 where the encoded OV dots would add an extra layer of security into the traceable authentication system.

It should also be appreciated that the various aspects of this invention can also be applied to incorporate other types of security dot into various devices and the intention is to specifically cover both the use of OV Dots with these techniques, the OV Dot related particles and any articles made using these techniques incorporating other security dot devices.

The invention relates to novel security devices by incorporating the coded metallic holographic platelets as described in WO 2005/078530 into items such as, for example, security papers, foils, plastic ID card bodies and the like and print where incorporated into the surface or the body of the material is this new form of diffractive metal platelet / disc containing field authenticable diffractive images and an identification code. As will be appreciated this involves a number of novel manufacturing techniques to incorporate the platelets into or onto the substrate.

The invention is described further hereinafter, by way of example only, with reference to the accompanying drawings in which:
Fig. 1 illustrates a schematic OV Dot platelet consisting of a small metal hologram with apertures to form the identification code;
Figs. 2 and 3 show a security article embodying the invention for anti-counterfeit, authentication and tracking purposes;
Fig. 4a and 4b show a hot stamping foil, in this case a holographic hot stamping foil, containing OV Dot embedded in the foil lacquer or adhesive mounted on a polyester or similar carrier with a heat activated adhesive and release layer;
Fig. 5 shows the end application of OV Dot applied by an extrusion process into the body of a plastic film such as polycarbonate shown typically in an ID card application where the OV Dot acts as an authentification device to prove the validity card body with a durability similar to that of the card body itself and thus able to withstand adverse conditions to remain authenticable;
Figs. 6a and 6b illustrate the manufacture of OV Dot applied by spraying to form security paper where the OV dot is sprayed directly on to the wet paper web as in Fig 6a, and. Fig 6b shows an additional optional a stage of applying a surface lacquer to the paper and then drying to form a coating to bind in the OV Dot into the surface;
Fig. 6c illustrates the formation of paper and OV Dot using a drum paper making process, again spraying the OV Dot into the wet paper slurry as it is formed;
Fig 7 illustrates how OV Dot particles may be included directly into the body of a suitable plastic film such as polycarbonate, PET and PVC for example, by mixing the OV Dot material into the in-feed material for the extrusion process which is then extruded as is known under heat and pressure / tension in the art to form a flat sheet of film which in this case has OV Dot particles embedded within the body of the film.
Fig 8 illustrates how OV Dots may be applied into a hot stamping foil by applying an adhesive to the web using a roller coating process and then spraying the OV Dots into the adhesive before the adhesive is dried in a drying tunnel;
Fig 9 shows an alternative application of OV Dot particles in this case in a system designed for adding the particles during personalisation by use of a magnetic toner printer.

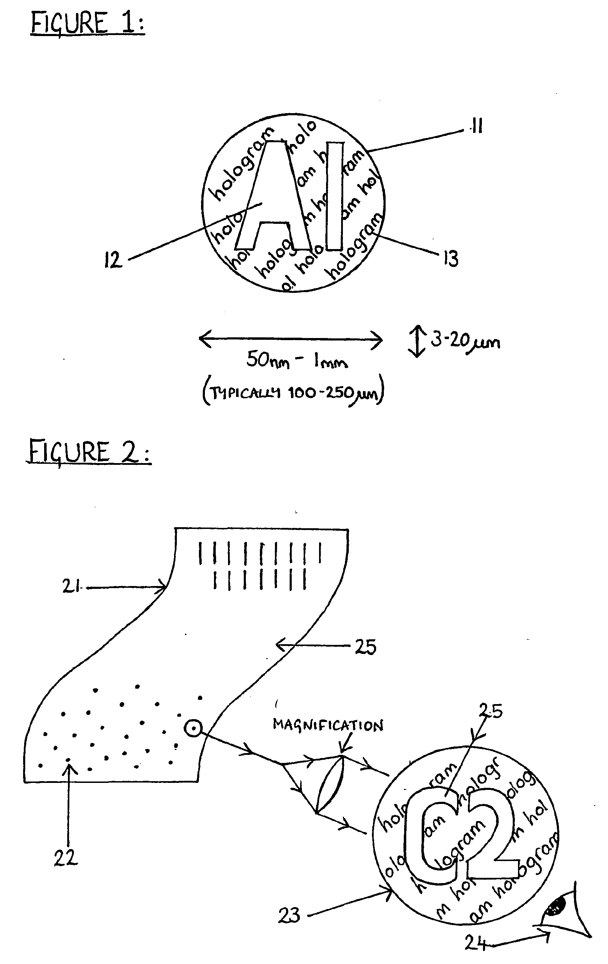

Fig 1 shows a schematic OV Dot platelet consisting of a small metal hologram with apertures to form the identification code. Fig 1 schematically shows the embodiment of the metal identification platelet as detailed in W2005/078530 A1 showing a round disc shaped holographic metal platelet 11 containing a holographic or diffractive image 13 located on one of the planar surfaces and a potentially unique identification code constituted as a set of holes though the hologram 12. A typical platelet or pariicie size wouid be 50-300um in diameter and 3-25 um in thickness depending on application. In a preferred embodiment the metal platelets are disc like in form, being substantially circular and planar. In other embodiments other shapes can be formed and used , for example rectangles, linear shapes, polygons, etc depending on the masking artwork used - these items would also tend to be planar with dimensions between 100 x 20um and 500 x 500um and typically 3-20um thick. (minimum to maximum, normal thickness c 10um). The production method for these platelets can be as described in W2005/078530 A1

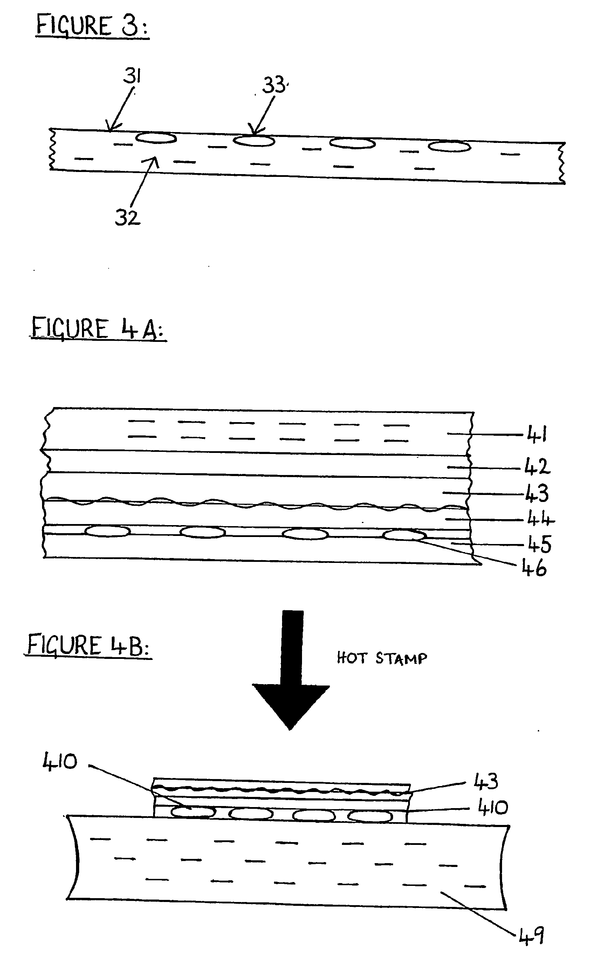

As noted, Figs. 2 and 3 show a security article 21 and 31 for anti-counterfeit, authentication and tracking purposes, comprising a substrate material 25, 32 containing at least one or preferably several, encoded metal holographic platelets 22, 33 incorporated into the surface or body of the article 25,31, wherein the platelet carries a surface relief diffractive structure and can be authenticated by inspection 23, 24 of both a holographic device by illumination and visual, eyeglass and magnifier inspection 23 and which can also be authenticated by inspection under magnification of an arbitrarily passage shaped hole in the metal platelet 25 carrying an authenticating code as shown schematically in Fig 2. Figs. 2 and 3 show a security device containing holographic metal platelets wherein the substrate material 21, 31 is paper, or a security paper or a plastic substrate. Fig 2 shows firstly how a paper document.21 secured by an OV Dot coating embedded 33 within the surface of the paper 25,31 and how this may be authenticated by viewing the OV Dot on the paper surface through a magnifying device to visualize the hologram and code.

As noted above, Fig 3 shows in profile how the OV Dot 33 may be distributed on the surface of such a paper 31, 32.

Fig 4a and 4b show how a hot stamping foil 41, in this case a holographic hot stamping foil containing an embossed surface relief structure and an HRI coating 43, 44, containing OV Dot embedded 46 in the foil lacquer 43 or adhesive 45, 47 mounted on a polyester or similar carrier 41 with a heat activated adhesive and release layer 47, 42 (Fig 4A) which releases under heat and pressure when hot stamped 48 to transfer the hot stamping foil to the article 410, 49. Fig 4b shows the structure 410, 49 after hot foiling where the polyester carrier is removed, the heat activated adhesive has adhered to the surface of the paper or plastic so transferring the OV Dots 46 permanently to the surface of the substrate, typically paper or plastic where they are locked into a thin layer of hot stamping foil and adhesive for authentication 47. Optionally the foil may also contain a visible hologram, in this a case we have shown an HRI hologram 43, 44 but this could also be demetallised in areas for example and solid metallization in other areas depending on the effect desired.

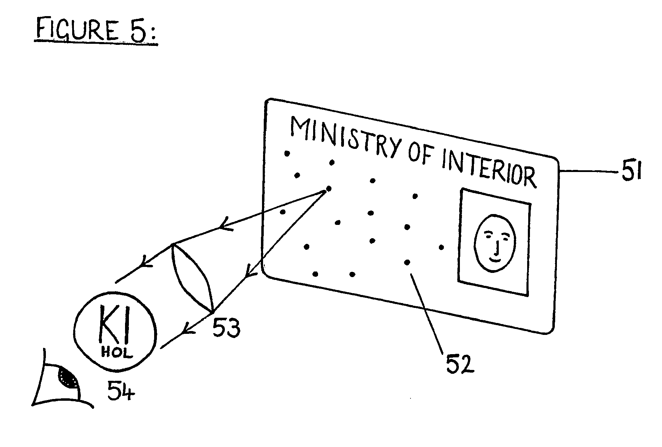

Fig 5 shows the end application of OV Dot 52 applied by an extrusion process into the body of a plastic film 51 such as polycarbonate shown typically in an ID card application 51 where the OV Dot acts as an authentifiable article 53, 54 device to prove the validity card body with a durability similar to that of the card body itself and thus able to withstand adverse conditions to remain authenticable.

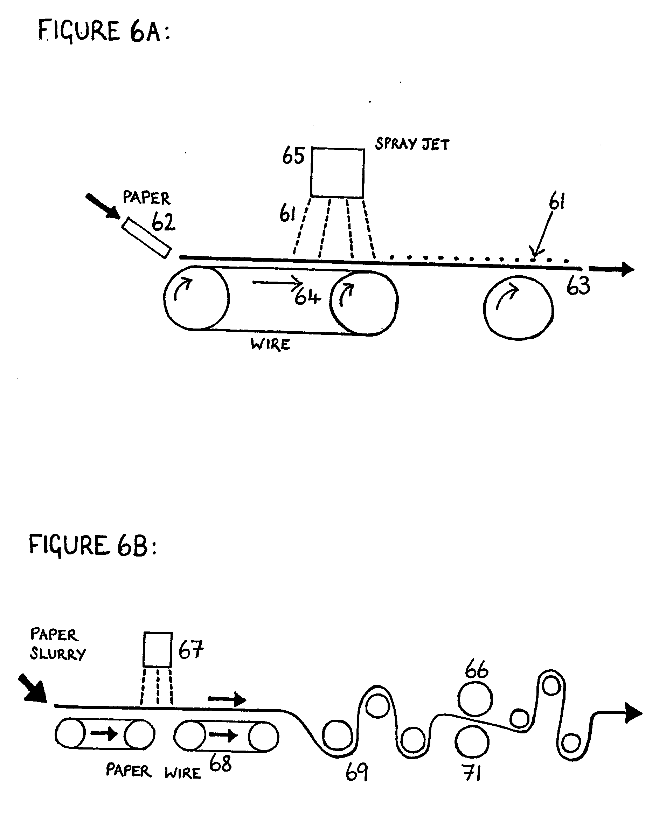

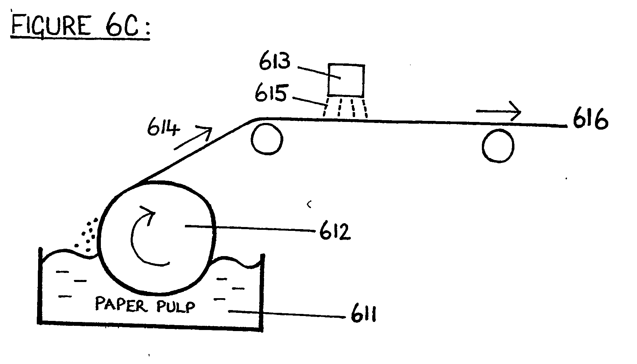

Figs 6a and 6b illustrate the manufacture of OV Dot 61 using a wire process applied by spraying 65, 61, 67 to form security paper 63 where the OV dot is sprayed directly on to the wet paper web 63 as in Figure 6a after the paper slurry 62 has been applied to the paper wire form forming the paper 64. Fig 6b shows an additional optional a stage of applying a surface lacquer 71 to the paper and then drying 70 to form a coating to bind in the OV Dot into the surface. Figs 6a and B illustrate that the application of OV Dot 61 into a paper to form an OV Dot security paper 63 is done by a preferred route directly at the paper mill by spraying the dots 61 directly onto the wet paper web 62,64 just as the paper is being formed 64 . Fig 6c illustrates the formation of paper and OV Dot using a drum paper making process, again spraying the OV Dot into the wet paper slurry as it is formed. A drum 612 rotates in a vat of paper slurry 611. As the web of wet paper so formed on the surface of the rotating drum is partially dried and then pulled off to form a web of damp paper 614, the OV Dots 615 are sprayed using a spray dispense 613 to form a paper web with OV Dots on the surface and in the body of the paper 616.

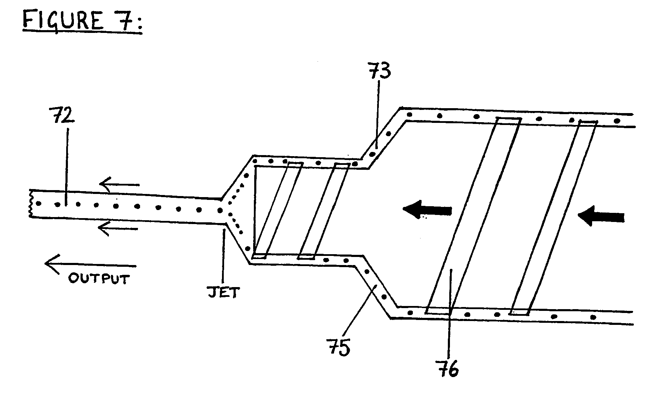

Fig 7 illustrates how OV Dot particles may be included directly into the body of a suitable plastic film such as polycarbonate, PET and PVC for example, by mixing the OV Dot material into the in-feed material 775 for the extrusion process 74, 72 which is then extruded using a screw drive 76 as is known under heat and pressure/tension in the art two form a flat sheet of film 72 which in this case has OV Dot particles embedded within the body of the film 72.

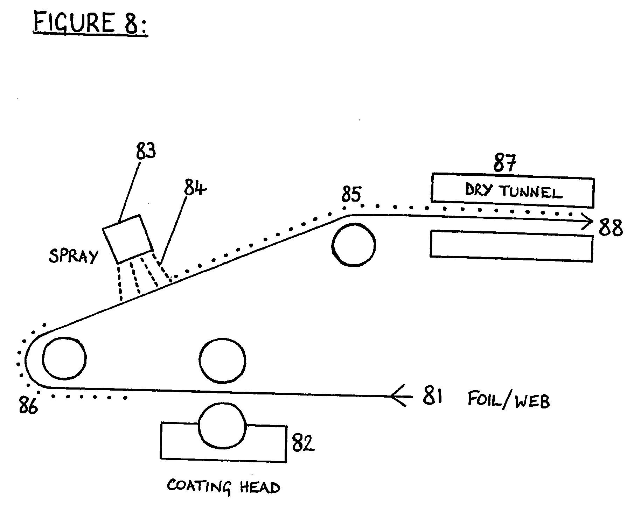

Fig 8 illustrates how OV Dots may be applied into a hot stamping foil by applying an adhesive 82, 86 to the web 81 using a roller coating process 82 and then spraying the OV Dots 83, 84 into the adhesive 85 before the adhesive is dried in a drying tunnel 87.using a spray dispenser 83. As an alternative method the spray application can be replaced by application with a reverse kiss coat application using the OV Dot in solution in the heat seal adhesive. As a second stage the foil will be over-coated 81, 82, 86, 87 with a second coat of heat seal adhesive to lock in the OV Dots and ensure the OV Dots transfer to the end substrate of application such as paper or plastic.

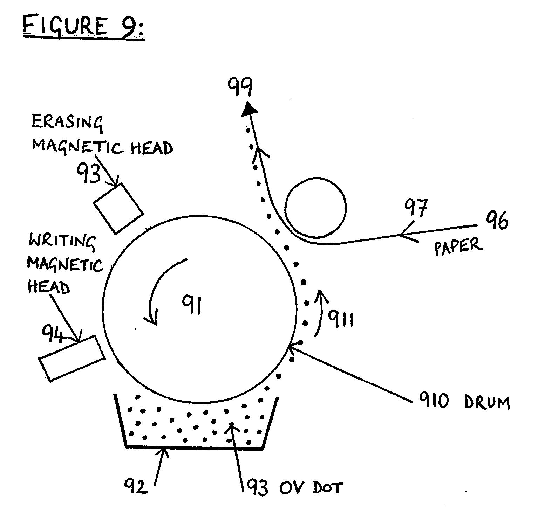

Fig. 9 shows an alternative application of OV Dot particles in this case in a system designed for adding the particles during personalisation by use of a magnetic toner printer 91. The OV Dot particles are added into the reservoir and which can include a toner binder 92, 93, the drum 91 is magnetized 94 to pick up the print pattern which then transfers the printed pattern (Including OV dots) onto the substrate 911, 99 such as paper 97 which is then treated under heat and pressure (normally with a siliconised hot roller) to fuse the heat activated toner into the surface of the substrate 99 which typically will comprise paper or plastic though one could also consider a foil. In this way OV Dot inks could be used to add security to the individual personalised data on a document or to add a security mark at the point of issue.

From the above it should be appreciated that the invention can provide for the manufacture of an article, and related security device, by way of the method steps noted above and employing either OV Dot type identification platelets, or other types of identification platelets. In particular, the invention need not be restricted to the use of metal platelets.

## Claims

1. An article (21,31) protected by security features (22,23), the article comprising a substrate material (25,32) including a plurality of the said security features each comprising an encoded holographic platelet wherein each platelet carries a surface relief diffractive structure forming a holographic device and can be authenticated by inspection of the holographic device by illumination and visual, eyeglass and magnifier inspection, and which can also be authenticated by inspection under magnification of an arbitrarily passage-shaped hole in the platelet carrying an authenticating code, and so as to provide for an anti-counterfeit and/or authentication feature of the article, **characterised in that** the plurality of security features is incorporated into the surface and/or body of the article.

2. An article as claimed in Claim 1, wherein the substrate material comprises at least one of paper, security paper, hot stamping foil, diffractive imaged HRI hot stamping foil, a plastic sheet or molding material.

3. An article as claimed in any one or more of Claims 1 to 2, wherein the holographic platelet has a body comprising nickel.

4. An article as claimed in any one or more of Claims 1 to 3, wherein the substrate material comprises one of paper or security paper and wherein the holographic platelets have been spray applied onto the surface of the article comprising a paper web.

5. An article as claimed in the Claim 4, and formed by a spray dispenser used to disperse the particles over the wet paper web, the dimensions of the spray device nozzles and rate of spray having been adjusted to provide the desired holographic platelet density under statistical examination of the finished article.

6. An article as claimed in any one or more of the preceding claims, wherein the substrate material is paper or security paper and wherein the holographic platelets have been wet coated onto the surface of the device.

7. An article as claimed in Claim 6, the platelets having been coated by a process of wet coating using a technique of meyer bar, direct gravure or reverse kiss coating.

8. An article as claimed in Claim 7, having been formed by way of a direct or reverse gravure roller in the form of a continuous groove pattern line or tri-helical which is of an aperture size sufficient to allow the holographic platelets to be allowed through on the substrate surface.

9. An article as claimed in Claim 8, wherein the pitch of the application roller lines is a typical maximum tip to tip dimensions 30% larger than the holographic platelet dimensions.

10. An article as claimed in Claim 1 or 2, wherein the substrate comprises one of:
hot stamping foil, or imaged diffractive embossed and HRI metallised hot stamping foil, the holographic platelets having been incorporated by a method of coating of a heat seal adhesive or lacquer onto the foil, spraying of the holographic platelets into the heat seal adhesive an then subsequent over-coating by second layer of heat seal adhesive to overcoat the particles to ensure transfer to form a transfer foil containing holographic metal platelets; or
hot stamping foil, or imaged diffractive embossed and HRI metallised hot stamping foil, the holographic platelets having been incorporated by a method of wet coating of an heat seal adhesive or lacquer onto the foil wherein the coating contains holographic platelets then subsequent over coating by second layer of heat seal adhesive to overcoat the particles to ensure transfer to form a transfer foil containing holographic platelets, wherein in the first wet coating process a technique of one of direct gravure, reverse gravure or reverse kiss coat is used where the engraved coating roller is in the form of a continuous groove pattern line or tri-helical line pattern of an aperture size sufficient to allow the holographic platelets to be allowed through on the substrate surface.

11. An article as claimed in Claim 1 or 2, wherein the substrate of the device consist of paper or plastic material with holographic identification platelets incorporated in the surface by a process of hot stamping transfer using a holographic or plain hot stamping foil containing holographic metal platelets, wherein in the first wet coating process the techniques of one of direct gravure, reverse gravure or reverse kiss coat is used where the engraved coating roller is in the form of a continuous groove pattern line or tri-helical line pattern of an aperture size sufficient to allow the holographic platelets there through on the substrate surface.

12. An article as claimed in Claim 11, and manufactured by way of a cold or hot stamping transfer foil containing holographic platelets, wherein in the first wet coating process, the technique of one of direct gravure, reverse gravure or reverse kiss coat is used where the engraved coating roller is in the form of a continuous groove pattern line or tri-helical line pattern of an aperture size sufficient to allow the holographic platelets to be allowed through on the substrate surface.

13. An article as claimed in any one or more of Claims 1 to 3, wherein the substrate of the device consist of plastic or paper or foil, the holographic platelets having been applied locally or over all the device by a printing process such as rotary or flatbed screen printing or rotary web gravure print.

14. An article as in claimed in Claim 13, and having employed printing ink consisting of holographic platelet dispersed in a carrying lacquer, typically for a screen print process to be dried by either ultra violet light curing or by solvent or aqueous solution drying.

15. An article as claimed in any one or more of Claims 1 to 3, the holographic platelets having been applied to the substrate by a process of magnetic toner printing where a magnetically active roller attracts the dots for preferential depositing where the printing cylinder is magnetically active.

16. An article as claimed in Claim 15, wherein the holographic platelets are incorporated in localized areas of the document and are used as part of a personalisation process to allow addition authentication.

17. An article as claimed in any one or more of Claims 1 to 3, and comprising a sheet of plastic material, the holographic platelets having been incorporated in the body of the pellets of the plastic material feedstock prior to the extrusion process, and then incorporated into the extruded film by passing through the extrusion process with the film as it is heated and stretched to embed the holographic I platelets within the body of the plastic card material.

18. An article as claimed in Claim 17 and comprising one of an identity card or credit card or the like.

19. An article as claimed in any one or more of Claims 1 to 3 and comprising a plastic moulded item containing holographic platelets having been incorporated into the feedstock pellets of a plastic material prior to injection moulding the two together and so incorporating the holographic platelets throughout the body of the mould for authentication of the moulded item.

20. An article as claimed in any one or more of Claims 1 to 3, wherein the substrate material comprises a textile or other cloth based material.

21. An article as claimed in any one or more of the preceding claims wherein the said aperture exhibits one of a fixed coding, or variable coding.

22. A method of manufacturing an article as claimed in any one or more of Claims 1 to 4, wherein the substrate material is a paper or security paper and wherein the holographic platelets is incorporated onto the surface by a process of spraying of the holographic platelets onto the wet paper web.

23. A method of manufacturing an article as claimed in Claim 4 and employing a spray dispenser to disperse the particles over the wet paper web wherein the dimensions of the spray device nozzles and rate of spray are adjusted to provide the desired holographic metal platelet density.

24. A method of manufacturing an article as claimed in any one or more of Claims 1 to 3, wherein the substrate material is paper or security paper and wherein the holographic platelets are incorporated into the surface of the device by a process of wet coating using a technique of meyer bar, direct gravure or reverse gravure or reverse kiss coating.

25. A method as claimed in Claim 24, and employing a direct or reverse gravure roller in the form of a continuous groove pattern line or tri-helical which is of an aperture size sufficient to allow the holographic metal platelets therethrough on the substrate surface.

26. A method as claimed in Claim 24, wherein the pitch of the application roller lines is a typical maximum tip to tip dimensions 30% larger than the holographic platelet dimensions.

27. A method of manufacturing an article as claimed in any one or more of Claims 1 to 4, wherein the substrate material is hot stamping foil, or imaged diffractive embossed and HRI metallised hot stamping foil, and wherein the holographic platelets are incorporated by a method of coating of an heat seal adhesive or lacquer onto the foil or release coating , spraying of holographic metal platelets into the heat seal adhesive an then subsequent over coating by second layer of heat seal adhesive to overcoat the particles to ensure transfer to form a transfer foil containing holographic platelets.

28. A method of manufacturing an article as claimed in any one or more of Claims 1 to 4, wherein the first substrate material is hot stamping foil, or imaged diffractive embossed and HRI metallised hot stamping foil, and wherein the holographic platelets are incorporated by a method of wet coating of an heat seal adhesive or lacquer onto the foil wherein the coating contains holographic platelets then subsequent over coating by second layer of heat seal adhesive to overcoat the particles to ensure transfer to form a transfer foil containing holographic platelets, wherein in the first wet coating process one of direct gravure, reverse gravure or reverse kiss coating is used where the engraved coating roller is in the form of a continuous groove pattern line or tri-helical line pattern of an aperture size sufficient to allow the holographic platelets to be allowed through on the substrate surface.

29. A method of manufacturing an article as claimed in any one or more of Claims 1 to 3, wherein the substrate of the device consist of paper or plastic material and including the step of incorporating holographic identification platelets in the surface by a process of hot stamping transfer using a holographic or plain hot stamping foil.

30. A method as claimed in Claim 29 and employing a cold or hot stamping transfer foil containing holographic platelets, wherein in the first wet coating process the techniques of one of direct gravure, reverse gravure or reverse kiss coat is used where the engraved coating roller is in the form of a continuous groove pattern line or tri-helical line pattern of an aperture size sufficient to allow the holographic platelets to be allowed through on the substrate surface.

31. A method of manufacturing an article as claimed in any one or more of Claims 1 to 3, wherein the substrate of the device consist of plastic or paper or foil and the holographic platelets are applied locally or over all the device by a printing process such comprising one of rotary or flatbed screen printing or rotary web gravure print.

32. A method as claimed in Claim 31, and employing printing ink consisting of holographic platelet dispersed in a carrying lacquer for a screen print process to be dried by either ultra violet light curing or by solvent or aqueous solution drying.

33. A method of manufacturing an article as claimed in any one or more of Claims 1 to 3, and including applying the holographic platelets to the substrate by a process of magnetic toner printing.

34. A method as claimed in Claim 33, wherein the holographic platelets are incorporated in localized areas of the document and are used as part of a personalisation process to allow addition authentication.

35. A method of manufacturing an article as claimed in any one or more of Claims 1 to 4, and consisting of a sheet of plastic material and including the step of incorporating the holographic platelets into the body of pellets of a plastic material feedstock prior to an extrusion process and which are then incorporated into the extruded film by passing through the extrusion process with the film as it is heated and stretched to embed the holographic platelets within the body of the plastic material.

36. A method of manufacturing an article as claimed in any one or more of Claims 1 to 4, comprising a plastic moulded item containing holographic platelets, and including the step of incorporating the holographic platelets into the feedstock pellets of the plastic material prior to injection and moulding the two together thereby incorporating the holographic platelets throughout the body of the mould for authentication of the moulded item.

37. A security item comprising an article as claimed in any one or more of Claims 1 and 2, wherein the size of the holographic platelets is in the range 50nm to 1 mm.

38. A security item comprising an article as claimed in any one or more of Claims 1 to 3 and arranged to be authenticated by the machine examination of a laser verifiable machine readable feature,

39. A security device comprising an article as manufactured according to a method as claimed in any one or more of Claims 22 to 36.

40. A hot stamping foil formed by means of a method as claimed in any one or more of Claims 22 to 36 and incorporating OV Dot identification platelets.

41. A hot stamping foil device formed by means of a method as claimed in any one or more of Claims 22 to 36 and incorporating OV Dot identification platelets.

## Patentansprüche

1. Artikel (21, 31), der durch Sicherheitsmerkmale (22, 23) geschützt wird, wobei der Artikel ein Substratmaterial (25, 32) mit mehreren der genannten Sicherheitsmerkmale umfasst, die jeweils ein codiertes holografisches Plättchen umfassen, wobei jedes Plättchen eine diffraktive Oberflächenreliefstruktur trägt, die eine holografische Vorrichtung bildet und durch Inspizieren der holografischen Vorrichtung durch Beleuchtung und Sicht-, Augenglas- und Lupeninspektion authentifiziert werden kann und die auch durch Inspektion unter Vergrößerung eines willkürlich kanalförmigen Lochs in dem einen Authentifizierungscode tragenden Plättchen authentifiziert werden kann, um ein Fälschungssicherheits- und/oder Authentifizierungsmerkmal des Artikels bereitzustellen, **dadurch gekennzeichnet, dass** die mehreren Sicherheitsmerkmale in die Oberfläche und/oder den Körper des Artikels integriert sind.

2. Artikel nach Anspruch 1, wobei das Substratmaterial wenigstens eines aus Papier, Sicherheitspapier, Heißprägefolie, diffraktiver abgebildeter HRI-Heißprägefolie, Kunststofffolie und Formmaterial umfasst.

3. Artikel nach einem oder mehreren der Ansprüche 1 bis 2, wobei das holografische Plättchen einen Nickel umfassenden Körper hat.

4. Artikel nach einem oder mehreren der Ansprüche 1 bis 3, wobei das Substratmaterial Papier oder Sicherheitspapier umfasst und wobei die holografischen Plättchen auf die Oberfläche des eine Papierbahn umfassenden Artikels aufgesprüht wurden.

5. Artikel nach Anspruch 4, gebildet durch einen Sprühspender, der zum Dispergieren der Partikel über die nasse Papierbahn benutzt wird, wobei die Abmessungen der Sprühvorrichtungsdüsen und die Sprührate so justiert wurden, dass die gewünschte holografische Plättchendichte unter statistischer Untersuchung des fertigen Artikels erzielt wird.

6. Artikel nach einem oder mehreren der vorherigen Ansprüche, wobei das Substratmaterial Papier oder Sicherheitspapier ist und wobei die holografischen Plättchen nass auf die Oberfläche der Vorrichtung aufgebracht wurden.

7. Artikel nach Anspruch 6, wobei die Plättchen durch einen Nassbeschichtungsprozess unter Anwendung einer Rollrakelstreich-, Direktgravur- oder Reverse-Kiss-Beschichtungstechnik aufgebracht wurden.

8. Artikel nach Anspruch 7, gebildet mit einer Direkt- oder Umkehrgravurwalze in Form einer kontinuierlichen Nutmusterlinie oder Haschur mit einer Aperturgröße, die ausreicht, um die holografischen Plättchen auf die Substratoberfläche durchzulassen.

9. Artikel nach Anspruch 8, wobei die Teilung der Applikationswalzenlinien eine typische maximale Spitze-zu-Spitze-Abmessung ist, die 30 % größer ist als die Abmessungen der holografischen Plättchen.

10. Artikel nach Anspruch 1 oder 2, wobei das Substrat eines der Folgenden umfasst:
Heißprägefolie oder abgebildete diffraktive geprägte und HRI-metallisierte Heißprägefolie, wobei die holografischen Plättchen mit einem Verfahren des Aufbringens eines Heißsiegelklebstoffs oder -lacks auf die Folie, Sprühen der holografischen Plättchen in den Heißsiegelklebstoff und dann nachfolgendes Überziehen mit einer zweiten Schicht Heißsiegelklebstoff integriert wurden, um die Partikel zu überziehen, um einen Transfer zum Bilden einer Transferfolie zu gewährleisten, die holografische Metallplättchen enthält; oder
Heißprägefolie oder abgebildete diffraktive geprägte und HRI-metallisierte Heißprägefolie, wobei die holografischen Plättchen mit einem Verfahren des Nassaufbringens eines Heißsiegelklebstoffs oder -lacks auf die Folie, wobei die Beschichtung holografische Plättchen enthält, dann nachfolgendes Überziehen mit einer zweiten Schicht Heißsiegelklebstoff integriert wurden, um die Partikel zu überziehen, um einen Transfer zum Bilden einer Transferfolie zu gewährleisten, die holografische Plättchen enthält, wobei im ersten Nassbeschichtungsprozess eine Technik aus Direktgravur, Umkehrgravur und Reverse-Kiss-Beschichtung benutzt wird, wenn die gravierte Beschichtungswalze in Form einer kontinuierlichen Nutmusterlinie oder eines Haschurlinienmusters mit einer Aperturgröße vorliegt, die ausreicht, um die holografischen Plättchen auf die Substratoberfläche durchzulassen.

11. Artikel nach Anspruch 1 oder 2, wobei das Substrat der Vorrichtung aus Papier oder Kunststoff mit holografischen Identifikationsplättchen besteht, die mit einem Heißprägetransferprozess mittels einer holografischen oder einfachen Heißprägefolie in die Oberfläche integriert werden, die holografische Metallplättchen enthält, wobei im ersten Nassbeschichtungsprozess eine Technik aus Direktgravur, Umkehrgravur und Reverse-Kiss-Beschichtung benutzt wird, wobei die gravierte Beschichtungswalze in Form einer kontinuierlichen Nutmusterlinie oder eines Haschurlinienmusters mit einer Aperturgröße vorliegt, die ausreicht, um die holografischen Plättchen auf die Substratoberfläche durchzulassen.

12. Artikel nach Anspruch 11, hergestellt mit einer Kalt- oder Heißpräge-Transferfolie, die holografische Plättchen enthält, wobei im ersten Nassbeschichtungsprozess eine Technik aus Direktgravur, Umkehrgravur und Reverse-Kiss-Beschichtung benutzt wird, wobei die gravierte Beschichtungswalze in Form einer kontinuierlichen Nutmusterlinie oder eines Haschurlinienmusters mit einer Aperturgröße vorliegt, die ausreicht, um die holografischen Plättchen auf die Substratoberfläche durchzulassen.

13. Artikel nach einem oder mehreren der Ansprüche 1 bis 3, wobei das Substrat der Vorrichtung aus Kunststoff oder Papier oder Folie besteht, wobei die holografischen Plättchen lokal oder über die gesamte Vorrichtung mit einem Druckprozess wie Rotations- oder Flachbett-Siebdruck oder Rotations-Bahngravurdruck aufgebracht wurden.

14. Artikel nach Anspruch 13, bei dem Drucktinte bestehend aus in einem Trägerlack dispergierten holografischen Plättchen typischerweise für einen Siebdruckprozess benutzt wurde, die entweder durch UV-Lichthärtung oder durch Lösungsmittel- oder wässrige Lösungstrocknung getrocknet wird.

15. Artikel nach einem oder mehreren der Ansprüche 1 bis 3, wobei die holografischen Plättchen mit einem Magnettonerdruckprozess auf das Substrat aufgebracht wurden, wobei eine magnetisch aktive Walze die Punkte zum preferentiellen Absetzen anzieht, wo der Druckzylinder magnetisch aktiv ist.

16. Artikel nach Anspruch 15, wobei die holografischen Plättchen in lokalisierte Bereiche des Dokuments integriert und als Teil eines Personalisierungsprozesses benutzt werden, um zusätzliche Authentifizierung zuzulassen.

17. Artikel nach einem oder mehreren der Ansprüche 1 bis 3, der eine Kunststofffolie umfasst, wobei die holografischen Plättchen vor dem Extrusionsprozess in den Körper der Pellets des Kunststoffrohmaterials integriert wurden und dann in die extrudierte Folie durch Leiten durch den Extrusionsprozess mit der Folie integriert wurden, während die Folie erhitzt und gestreckt wird, um die holografischen Plättchen in den Körper des Plastikkartenmaterials einzubetten.

18. Artikel nach Anspruch 17, der eine Identitätskarte oder eine Kreditkarte oder dergleichen umfasst.

19. Artikel nach einem oder mehreren der Ansprüche 1 bis 3, der einen aus Kunststoff geformten Gegenstand umfasst, der holografische Plättchen enthält, die in die Rohmaterialpellets eines Kunststoffs vor dem Spritzformen der beiden miteinander integriert wurden, so dass die holografischen Plättchen über den gesamten Körper der Form zum Authentifizieren des geformten Gegenstands integriert werden.

20. Artikel nach einem oder mehreren der Ansprüche 1 bis 3, wobei das Substratmaterial ein Textil- oder anderes Material auf Tuchbasis umfasst.

21. Artikel nach einem oder mehreren der vorherigen Ansprüche, wobei die genannte Apertur feste Codierung oder variable Codierung aufweist.

22. Verfahren zur Herstellung eines Artikels nach einem oder mehreren der Ansprüche 1 bis 4, wobei das Substratmaterial ein Papier oder Sicherheitspapier ist und wobei die holografischen Plättchen auf die Oberfläche mit einem Prozess des Sprühens der holografischen Plättchen auf die nasse Papierbahn integriert werden.

23. Verfahren zur Herstellung eines Artikels nach Anspruch 4 unter Verwendung eines Sprühspenders zum Dispergieren der Partikel über die nasse Papierbahn, wobei die Abmessungen der Sprühvorrichtungsdüsen und die Sprührate so justiert werden, dass die gewünschte holografische Metallplättchendichte erzielt wird.

24. Verfahren zur Herstellung eines Artikels nach einem oder mehreren der Ansprüche 1 bis 3, wobei das Substratmaterial Papier oder Sicherheitspapier ist und wobei die holografischen Plättchen mit einem Nassbeschichtungsprozess unter Anwendung einer Rollrakelstreich-, Direktgravur- oder Umkehrgravur- oder Reverse-Kiss-Beschichtungstechnik in die Oberfläche der Vorrichtung integriert werden.

25. Verfahren nach Anspruch 24 unter Verwendung einer Direkt- oder Umkehrgravurwalze in Form einer kontinuierlichen Nutmusterlinie oder Haschur mit einer Aperturgröße, die ausreicht, um die holografischen Metallplättchen auf die Substratoberfläche durchzulassen.

26. Verfahren nach Anspruch 24, wobei die Teilung der Applikationswalzenlinien eine typische maximale Spitze-zu-Spitze-Abmessung ist, die 30 % größer ist als die Abmessungen der holografischen Plättchen.

27. Verfahren zur Herstellung eines Artikels nach einem oder mehreren der Ansprüche 1 bis 4, wobei das Substratmaterial Heißprägefolie oder abgebildete diffraktive geprägte und HRI-metallisierte Heißprägefolie ist und wobei die holografischen Plättchen mit einem Verfahren zum Aufbringen eines Heißsiegelklebstoffs oder -lacks auf die Folie oder Trennbeschichtung, Sprühen von holografischen Metallplättchen in den Heißsiegelklebstoff und dann nachfolgendes Überziehen mit einer zweiten Schicht Heißsiegelklebstoff integriert werden, um die Partikel zu überziehen, um einen Transfer zum Bilden einer Transferfolie zu gewährleisten, die holografische Plättchen enthält.

28. Verfahren zur Herstellung eines Artikels nach einem oder mehreren der Ansprüche 1 bis 4, wobei das erste Substratmaterial Heißprägefolie oder abgebildete diffraktive geprägte und HRI-metallisierte Heißprägefolie ist und wobei die holografischen Plättchen mit einem Verfahren des Nassaufbringens eines Heißsiegelklebstoffs oder -lacks auf die Folie, wobei die Beschichtung holografische Plättchen enthält, dann nachfolgendes Überziehen mit einer zweiten Schicht Heißsiegelklebstoff integriert werden, um die Partikel zu überziehen, um einen Transfer zum Bilden einer Transferfolie zu gewährleisten, die holografische Plättchen enthält, wobei im ersten Nassbeschichtungsprozess eines aus Direktgravur, Umkehrgravur oder Reverse-Kiss-Beschichtung benutzt wird, wobei die gravierte Beschichtungswalze in Form einer kontinuierlichen Nutmusterlinie oder eines Haschurlinienmusters mit einer Aperturgröße vorliegt, die ausreicht, um die holografischen Plättchen durch eine Substratoberfläche durchzulassen.

29. Verfahren zur Herstellung eines Artikels nach einem oder mehreren der Ansprüche 1 bis 3, wobei das Substrat der Vorrichtung aus Papier oder Kunststoff besteht, das den Schritt des Integrierens von holografischen Identifikationsplättchen mit einem Prozess des Heißprägetransfers mit einer holografischen oder einfachen Heißprägefolie in der Oberfläche beinhaltet.

30. Verfahren nach Anspruch 29, bei dem eine Kalt- oder Heißpräge-Transferfolie benutzt wird, die holografische Plättchen enthält, wobei im ersten Nassbeschichtungsprozess eine Technik aus Direktgravur, Umkehrgravur und Reverse-Kiss-Beschichtung benutzt wird, wobei die gravierte Beschichtungswalze in Form einer kontinuierlichen Nutmusterlinie oder eines Haschurlinienmusters mit einer Aperturgröße vorliegt, die ausreicht, um die holografischen Plättchen auf die Substratoberfläche durchzulassen.

31. Verfahren zur Herstellung eines Artikels nach einem oder mehreren der Ansprüche 1 bis 3, wobei das Substrat der Vorrichtung aus Kunststoff oder Papier oder Folie besteht und die holografischen Plättchen lokal oder über die gesamte Vorrichtung mit einem Druckprozess aufgebracht werden, der eines aus Rotations- oder Flachbett-Siebdruck oder Rotations-Bahngravurdruck beinhaltet.

32. Verfahren nach Anspruch 31, bei dem Drucktinte bestehend aus in einem Trägerlack dispergierten holografischen Plättchen für einen Siebdruckprozess benutzt wird, die durch UV-Lichthärtung oder durch Lösungsmittel- oder wässrige Lösungstrocknung getrocknet wird.

33. Verfahren zur Herstellung eines Artikels nach einem oder mehreren der Ansprüche 1 bis 3, das das Applizieren der holografischen Plättchen auf das Substrat mit einem Magnettonerdruckprozess beinhaltet.

34. Verfahren nach Anspruch 33, wobei die holografischen Plättchen in lokalisierte Bereiche des Dokuments integriert sind und als Teil eines Personalisierungsprozesses zum Zulassen von zusätzlicher Authentifizierung benutzt werden.

35. Verfahren zur Herstellung eines Artikels nach einem oder mehreren der Ansprüche 1 bis 4, bestehend aus einer Kunststoffplatte, das den Schritt des Integrierens der holografischen Plättchen in den Körper von Pellets eines Kunststoffrohmaterials vor einem Extrusionsprozess beinhaltet, die dann in die extrudierte Folie durch Leiten durch den Extrusionsprozess mit der Folie integriert werden, während die Folie erhitzt und gestreckt wird, um die holografischen Plättchen in den Körper des Kunststoffs einzubetten.

36. Verfahren zur Herstellung eines Artikels nach einem oder mehreren der Ansprüche 1 bis 4, das einen aus Kunststoff geformten Gegenstand umfasst, der holografische Plättchen enthält, und das den Schritt des Integrierens der holografischen Plättchen in die Rohmaterialpellets des Kunststoffs vor dem Injizieren und das Formen der beiden zusammen beinhaltet, um dadurch die holografischen Plättchen über den gesamten Körper der Form zum Authentifizieren des geformten Gegenstands zu integrieren.

37. Sicherheitsgegenstand, der einen Artikel nach einem oder mehreren der Ansprüche 1 und 2 umfasst, wobei die Größe der holografischen Plättchen im Bereich von 50 nm bis 1 mm liegt.

38. Sicherheitsgegenstand, der einen Artikel nach einem oder mehreren der Ansprüche 1 bis 3 umfasst, so angeordnet, dass er durch die maschinelle Prüfung eines laserverifizierbaren, maschinenlesbaren Merkmals authentifiziert werden kann.

39. Sicherheitsvorrichtung, die einen Artikel gemäß Herstellung mit einem Verfahren nach einem oder mehreren der Ansprüche 22 bis 36 umfasst.

40. Heißprägefolie, die mittels eines Verfahrens nach einem oder mehreren der Ansprüche 22 bis 36 gebildet wird and die OV-Dot-Identifikationsplättchen beinhaltet.

41. Heißprägefolienvorrichtung, die mittels eines Verfahrens nach einem oder mehreren der Ansprüche 22 bis 36 gebildet wird und die OV-Dot-Identifikationsplättchen beinhaltet.

## Revendications

1. Un article (21, 31) protégé par des caractéristiques de sécurité (22, 23), l'article comprenant un matériau de substrat (25, 32) contenant une pluralité desdites caractéristiques de sécurité, chacune d'elles comprenant une plaquette holographique codée, où chaque plaquette comporte une structure diffractive en relief de surface formant un dispositif holographique et qui peut être authentifiée par une inspection du dispositif holographique par éclairage et inspection visuelle, à la lunette et à la loupe et qui peut également être authentifiée par inspection sous grossissement d'un trou arbitrairement en forme de conduit dans la plaquette munie d'un code d'authentification, et de façon à fournir une caractéristique d'anti-contrefaçon et/ou d'authentification de l'article, **caractérisé en ce que** la pluralité de caractéristiques de sécurité sont incorporées dans la surface et/ou le corps de l'article.

2. Un article selon la Revendication 1 où le matériau de substrat comprend au moins un élément parmi papier, papier infalsifiable, feuille d'estampage à chaud, feuille d'estampage à chaud d'une HRI imagée par diffraction, feuille de plastique ou matériau de moulage.

3. Un article selon l'une quelconque ou plusieurs des Revendications 1 à 2, où la plaquette holographique possède un corps contenant du nickel.

4. Un article selon l'une quelconque ou plusieurs des Revendications 1 à 3, où le matériau de substrat comprend un élément parmi papier ou papier infalsifiable et où les plaquettes holographiques ont été appliquées par pulvérisation sur la surface de l'article comprenant une bande de papier.

5. Un article selon la Revendication 4, et formé par un pulvérisateur utilisé de façon à disperser les particules sur la bande de papier humide, les dimensions des buses du dispositif de pulvérisation et la vitesse de pulvérisation ayant été ajustées de façon à fournir la densité de plaquettes holographiques souhaitée par examen statistique de l'article achevé.

6. Un article selon l'une quelconque ou plusieurs des Revendications précédentes, où le matériau de substrat est du papier ou du papier infalsifiable et où les plaquettes holographiques ont été enrobées par enrobage humide sur la surface du dispositif.

7. Un article selon la Revendication 6, les plaquettes ayant été enrobées par un procédé d'enrobage humide au moyen d'une technique d'étaleur d'encre, de gravure directe ou de couchage par léchage inverse.

8. Un article selon la Revendication 7, ayant été formé au moyen d'un rouleau de gravure directe ou inversée sous la forme d'une ligne de motif à rainure continue ou tri-hélicoïdale qui est d'une taille d'ouverture suffisante pour permettre aux plaquettes holographiques de traverser vers la surface du substrat.

9. Un article selon la Revendication 8, où le pas des lignes du rouleau d'application présente des dimensions typiques maximales de bout en bout supérieures de 30% aux dimensions de la plaquette holographique.

10. Un article selon la Revendication 1 ou 2, où le substrat comprend un élément parmi :
feuille d'estampage à chaud ou feuille d'estampage à chaud métallisée d'une HRI et gaufrée par diffraction imagée, les plaquettes holographiques ayant été incorporées par un procédé d'enrobage d'un adhésif thermocollable ou d'une laque sur la feuille, pulvérisation des plaquettes holographiques dans l'adhésif thermocollable et ensuite surenrobage subséquent par une deuxième couche d'adhésif thermocollable de façon à surenrober les particules afin d'assurer un transfert destiné à former une feuille de transfert contenant des plaquettes métalliques holographiques, ou
feuille d'estampage à chaud, ou feuille d'estampage à chaud métallisée d'une HRI et gaufrée par diffraction imagée, les plaquettes holographiques ayant été incorporées par un procédé d'enrobage humide d'un adhésif thermocollable ou d'une laque sur la feuille où l'enrobage contient des plaquettes holographiques, ensuite surenrobage subséquent par une deuxième couche d'adhésif thermocollable de façon à surenrober les particules afin d'assurer un transfert destiné à former une feuille de transfert contenant des plaquettes holographiques, où, dans le premier procédé d'enrobage humide, une technique parmi gravure directe, gravure inverse ou couchage par léchage inverse est utilisée, où le rouleau d'enrobage gravé est de la forme d'une ligne de motif à rainure continue ou d'un motif à ligne tri-hélicoïdale d'une taille d'ouverture suffisante pour permettre aux plaquettes holographiques de traverser vers la surface du substrat.

11. Un article selon la Revendication 1 ou 2, où le substrat du dispositif consiste en un papier ou un matériau plastique avec des plaquettes d'identification holographiques incorporées dans la surface par un procédé de transfert par estampage à chaud au moyen d'une feuille d'estampage à chaud holographique ou normale contenant des plaquettes métalliques holographiques, où, dans le premier procédé d'enrobage humide, une technique parmi gravure directe, gravure inverse ou couchage par léchage inverse est utilisée, où le rouleau d'enrobage gravé est de la forme d'une ligne de motif à rainure continue ou d'un motif à ligne tri-hélicoïdale d'une taille d'ouverture suffisante pour permettre aux plaquettes holographiques de passer au travers de celle-ci vers la surface du substrat.

12. Un article selon la Revendication 11, et fabriqué au moyen d'une feuille de transfert d'estampage à chaud ou à froid contenant des plaquettes holographiques, où, dans le premier procédé d'enrobage humide, une technique parmi gravure directe, gravure inverse ou couchage par léchage inverse est utilisée où le rouleau d'enrobage gravé est de la forme d'une ligne de motif à rainure continue ou d'un motif à ligne tri-hélicoïdale d'une taille d'ouverture suffisante pour permettre aux plaquettes holographiques de traverser vers la surface du substrat.

13. Un article selon l'une quelconque ou plusieurs des Revendications 1 à 3, où le substrat du dispositif consiste en plastique ou papier ou feuille, les plaquettes holographiques ayant été appliquées localement ou sur la totalité du dispositif par un procédé d'impression tel que sérigraphie à plat ou sur rotative ou héliogravure sur rotative.

14. Un article selon la Revendication 13, et ayant employé une encre d'impression se composant de plaquettes holographiques dispersées dans une laque support, typiquement pour un procédé de sérigraphie destinée à être séchée par soit un durcissement à la lumière ultra-violette ou par un séchage au moyen d'un solvant ou d'une solution aqueuse.

15. Un article selon l'une quelconque ou plusieurs des Revendications 1 à 3, les plaquettes holographiques ayant été appliquées au substrat par un procédé d'impression au toner magnétique où un rouleau magnétiquement actif attire les points pour un dépôt préférentiel, où le cylindre d'impression est magnétiquement actif.

16. Un article selon la Revendication 15, où les plaquettes holographiques sont incorporées dans des zones localisées du document et sont utilisées en tant que partie d'un procédé de personnalisation de façon à permettre une authentification additionnelle.

17. Un article selon l'une quelconque ou plusieurs des Revendications 1 à 3, et comprenant une feuille de matériau plastique, les plaquettes holographiques ayant été incorporées dans le corps des pastilles de la pâte de matériau plastique avant le procédé d'extrusion, et ensuite incorporées dans le film extrudé par un passage au travers du procédé d'extrusion avec le film à mesure qu'il est chauffé et étiré de façon à imbriquer les plaquettes holographiques à l'intérieur du corps du matériau de carte plastique.

18. Un article selon la Revendication 17 et comprenant une carte parmi une carte d'identité ou une carte de crédit ou un autre élément de même nature.

19. Un article selon l'une quelconque ou plusieurs des Revendications 1 à 3 et comprenant un élément moulé en plastique contenant des plaquettes holographiques ayant été incorporées dans les pastilles de pâte d'un matériau plastique avant moulage par injection des deux ensemble et ainsi l'incorporation des plaquettes holographiques à l'intérieur de la totalité du corps du moule à des fins d'authentification de l'élément moulé.

20. Un article selon l'une quelconque ou plusieurs des Revendications 1 à 3, où le matériau de substrat contient un textile ou un autre matériau à base de tissu.

21. Un article selon l'une quelconque ou plusieurs des Revendications précédentes où ladite ouverture présente un codage parmi codage fixe ou un codage variable.

22. Un procédé de fabrication d'un article selon l'une quelconque ou plusieurs des Revendications 1 à 4, où le matériau de substrat est un papier ou un papier infalsifiable et où les plaquettes holographiques sont incorporées sur la surface par un procédé de pulvérisation des plaquettes holographiques sur la bande de papier humide.

23. Un procédé de fabrication d'un article selon la Revendication 4 et utilisant un pulvérisateur de façon à disperser les particules sur la bande de papier humide où les dimensions des buses du dispositif de pulvérisation et la vitesse de pulvérisation sont ajustées de façon à fournir la densité de plaquettes holographiques souhaitée.

24. Un procédé de fabrication d'un article selon l'une quelconque ou plusieurs des Revendications 1 à 3, où le matériau de substrat est du papier ou du papier infalsifiable et où les plaquettes holographiques sont incorporées dans la surface du dispositif par un procédé d'enrobage humide au moyen d'une technique d'étaleur d'encre, de gravure directe ou de gravure inverse ou de couchage par léchage inverse.

25. Un procédé selon la Revendication 24, et utilisant un rouleau de gravure directe ou inversée sous la forme d'une ligne de motif à rainure continue ou tri-hélicoïdale qui est d'une taille d'ouverture suffisante pour permettre aux plaquettes métalliques holographiques de passer au travers de celle-ci vers la surface du substrat.

26. Un procédé selon la Revendication 24, où le pas des lignes du rouleau d'application présente des dimensions typiques maximales de bout en bout supérieures de 30% aux dimensions de la plaquette holographique.

27. Un procédé de fabrication d'un article selon l'une quelconque ou plusieurs des Revendications 1 à 4, où le matériau de substrat est une feuille d'estampage à chaud ou une feuille d'estampage à chaud métallisée d'une HRI et gaufrée par diffraction imagée, et où les plaquettes holographiques sont incorporées par un procédé d'enrobage d'un adhésif thermocollable ou d'une laque sur la feuille ou d'enrobage anti-adhésif, de pulvérisation de plaquettes métalliques holographiques dans l'adhésif thermocollable et ensuite un surenrobage subséquent par une deuxième couche d'adhésif thermocollable de façon à surenrober les particules afin d'assurer un transfert destiné à former une feuille de transfert contenant des plaquettes holographiques.

28. Un procédé de fabrication d'un article selon l'une quelconque ou plusieurs des Revendications 1 à 4, où le premier matériau de substrat est une feuille d'estampage à chaud ou une feuille d'estampage à chaud métallisée d'une HRI et gaufrée par diffraction imagée, et où les plaquettes holographiques sont incorporées par un procédé d'enrobage humide d'un adhésif thermocollable ou d'une laque sur la feuille où l'enrobage contient des plaquettes holographiques, ensuite un surenrobage subséquent par une deuxième couche d'adhésif thermocollable de façon à surenrober les particules afin d'assurer un transfert destiné à former une feuille de transfert contenant des plaquettes holographiques, où dans le premier procédé d'enrobage humide une technique parmi gravure directe, gravure inverse ou couchage par léchage inverse est utilisée où le rouleau d'enrobage gravé est de la forme d'une ligne de motif à rainure continue ou d'un motif à ligne tri-hélicoïdale d'une taille d'ouverture suffisante pour permettre aux plaquettes holographiques de traverser vers la surface du substrat.

29. Un procédé de fabrication d'un article selon l'une quelconque ou plusieurs des Revendications 1 à 3, où le substrat du dispositif consiste en un papier ou un matériau plastique et comprenant l'opération d'incorporation de plaquettes d'identification holographiques dans la surface par un procédé de transfert par estampage à chaud au moyen d'une feuille d'estampage à chaud holographique ou normale.

30. Un procédé selon la Revendication 29 et utilisant une feuille de transfert d'estampage à chaud ou à froid contenant des plaquettes holographiques, où dans le premier procédé d'enrobage humide une technique parmi gravure directe, gravure inverse ou couchage par léchage inverse est utilisée, où le rouleau d'enrobage gravé est de la forme d'une ligne de motif à rainure continue ou d'un motif à ligne tri-hélicoïdale d'une taille d'ouverture suffisante pour permettre aux plaquettes holographiques de traverser vers la surface du substrat.

31. Un procédé de fabrication d'un article selon l'une quelconque ou plusieurs des Revendications 1 à 3, où le substrat du dispositif consiste en plastique ou papier ou feuille et les plaquettes holographiques sont appliquées localement ou sur la totalité du dispositif par un procédé d'impression comprenant un procédé parmi sérigraphie à plat ou sur rotative ou héliogravure sur rotative.

32. Un procédé selon la Revendication 31, et utilisant une encre d'impression se composant de plaquettes holographiques dispersées dans une laque support pour un procédé de sérigraphie destinée à être séchée par soit un durcissement à la lumière ultra-violette ou un séchage au moyen d'un solvant ou d'une solution aqueuse.

33. Un procédé de fabrication d'un article selon l'une quelconque ou plusieurs des Revendications 1 à 3, et comprenant l'application des plaquettes holographiques au substrat par un procédé d'impression au toner magnétique.

34. Un procédé selon la Revendication 33, où les plaquettes holographiques sont incorporées dans des zones localisées du document et sont utilisées en tant que partie d'un procédé de personnalisation destiné à permettre une authentification additionnelle.

35. Un procédé de fabrication d'un article selon l'une quelconque ou plusieurs des Revendications 1 à 4, et se composant d'une feuille de matériau plastique et comprenant l'opération d'incorporation de plaquettes holographiques dans le corps de pastilles d'une pâte de matériau plastique avant un procédé d'extrusion et qui sont ensuite incorporées dans le film extrudé par un passage au travers du procédé d'extrusion avec le film à mesure qu'il est chauffé et étiré de façon à imbriquer les plaquettes holographiques à l'intérieur du corps du matériau plastique.

36. Un procédé de fabrication d'un article selon l'une quelconque ou plusieurs des Revendications 1 à 4, comprenant un élément moulé en plastique contenant des plaquettes holographiques, et comprenant l'opération d'incorporation des plaquettes holographiques dans les pastilles de pâte du matériau plastique avant injection et moulage des deux ensemble, incorporant ainsi les plaquettes holographiques à l'intérieur de la totalité du corps du moule à des fins d'authentification de l'élément moulé.

37. Un élément de sécurité comprenant un article selon l'une quelconque ou plusieurs des Revendications 1 et 2, où la taille des plaquettes holographiques se situe dans la plage de 50 nm à 1 mm.

38. Un élément de sécurité comprenant un article selon l'une quelconque ou plusieurs des Revendications 1 à 3 et agencé de façon à être authentifié par l'examen par machine d'une caractéristique lisible par machine vérifiable par laser.

39. Un dispositif de sécurité comprenant un article fabriqué selon un procédé selon l'une quelconque ou plusieurs des Revendications 22 à 36.

40. Une feuille d'estampage à chaud formée au moyen d'un procédé selon l'une quelconque ou plusieurs des Revendications 22 à 36 et incorporant des plaquettes d'identification de points OV.

41. Une feuille d'estampage à chaud dispositif formée au moyen d'un procédé selon l'une quelconque ou plusieurs des Revendications 22 à 36 et incorporant des plaquettes d'identification de points OV.
